# NEUE EUROPÄISCHE PATENTSCHRIFT

(11) **EP 0 261 529 B2**
(45) Veröffentlichungstag und Bekanntmachung des Hinweises auf die Entscheidung über den Einspruch: **11.08.1999**
(45) Hinweis auf die Patenterteilung: 15.06.1994
(21) Anmeldenummer: 87113357.5
(22) Anmeldetag: 12.09.1987
(51) Int. Cl.: G01F 1/06, G01F 1/10

(54) **Durchflussmengenmesser**
Flow meter
Débitmètre

(30) Priorität: 13.09.1986 DE 3631303
(43) Veröffentlichungstag der Anmeldung: 30.03.1988
(73) Patentinhaber: KUNDO SYSTEMTECHNIK GmbH, D-78105 St. Georgen (DE)
(72) Erfinder: Baderschneider, Kurt, Dipl.-Ing., D-7065 Winterbach (DE)
(74) Vertreter: Westphal, Klaus, Dipl.-Ing.

(56) Entgegenhaltungen:
- EP-A- 0 171 047
- AT-B- 376 302
- BE-A- 890 523
- DE-A- 1 127 096
- DE-A- 2 041 817
- GB-A- 885 100
- US-A- 4 333 354
- US-A- 4 389 902

## Beschreibung

Die Erfindung betrifft einen Durchflußmengenmesser nach dem Oberbegriff von Patentanspruch 1.

Zweck der Erfindung ist es, die Verwendung von Durchflußmengenmessern zu fördern und damit die Verbrauchsmessung von flüssigen Medien in der Genaigkeit zu verbessern.

Ein Durchflußmengenmesser nach dem Oberbegriff von Patentanspruch 1 ist durch die BE-A-890523 bekannt, von welcher die Erfindung ausgeht.

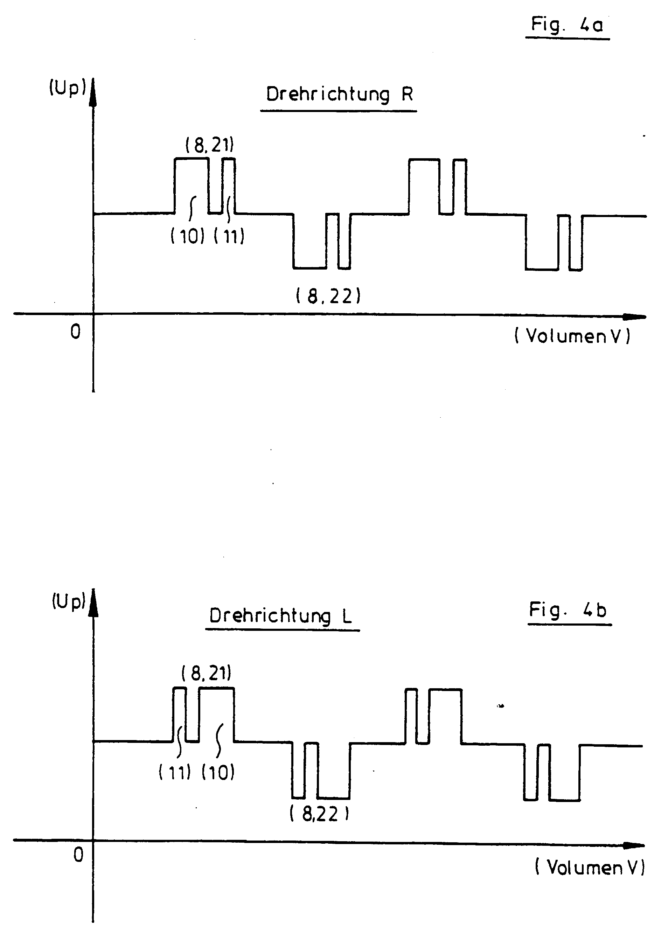

In Figur 4 dieser BE-A-890523 und dazugehörenden Beschreibung ist ein Durchflußmengenmesser beschrieben, bei dem ein als Flügelrad ausgebildetes Steuerelement Verwendung findet. Das Flügelrad weist flache, kreissegmentartige Flügel auf, welche in ungerader Anzahl auf der sie tragenden Drehachse angeordnet sind. Diametral einander gegenüberliegend, sind am Flügelrad jeweils Elektrodenpaare angebracht, welche mit ihren Elektroden beidseitig der kreisförmigen Bewegungsbahn der Flügel angeordnet sind und durch feststehende U-förmige Bügel getragen werden, welche die Flügel beidseitig übergreifen.

Die einzelnen Elektrodenpaare werden jeweils von den Flügeln des Steuerelementes durchlaufen, wodurch Widerstandsänderungen in dem umgebenden flüssigen Medium entstehen, welche von den Elektrodenpaaren detektiert werden.

Ein jedes der Elektrodenpaare ist als Brückenwiderstand in eine Meßschaltung eingefügt, wobei alternativ das eine oder das andere Elektrodenpaar von Flügeln des Steuerelementes nacheinander oassiert wird. Auf diese Weise wird ein etwas verstärkter Signalhub an der den Ausgang der Meßschaltung darstellenden Brückendiagonale erzielt.

Diese bekannte Anordnung eines nach dem elektrolytischen Detektionsverfahren arbeitenden Durchflußmengenmessers hat jedoch ungünstige Abmessungen der Abtastvorrichtung aufzuweisen. Außerdem ist die bauliche Zuordnung der U-förmigen Halterungen für die beiden Elektrodenpaare ungünstig.

Mit BE-A-890 523 ist ferner vorgeschlagen, anstelle des Flügelrades ein Steuerelement in Form einer zylindrischen Glocke mit einem gezahnten Rand vorzusehen, welchem diametral einander gegenüberliegend zwei Elektrodenpaare zugeordnet sind. Da sich hierbei die Steuerelemente axial erstrecken, ergeben sich günstigere Abmessungen. Aufwendig hinsichtlich Montage und Justierung sind jedoch die auch hier notwendigen U-förmigen Halterungen für die vier Einzelelektroden. Ein weiterer Nachteil ist, daß mit den punktförmigen Elektroden nur ein relativ kleiner Signalhub erzeugt werden kann.

Durch die EP-A-0171047 ist eine Meßschaltung für einen Durchflußmengenmesser bekannt, welcher ebenfalls nach dem elektrolytischen Meßverfahren arbeitet. Zwei im flüssigen Medium angeordnete Elektroden ist eine mittlere Elektrode zugeordnet. wobei die wirksamen elektrolytischen Widerstände zwischen dieser und den beiden äußeren Elektroden komplementär durch das nicht näher ausgewiesene umlaufende Steuerelement des Durchflußmengenmessers variierbar sind.

Die beiden äußeren Elektroden werden von komplementären Wechselspannungsimpulsen beaufschlagt. An der mittleren Elektrode wird eine Wechselspannung abgegriffen, welche im Rhythmus der Umlaufbewegungen des Steuerelementes variiert. Durch eine nachgeordnete Auswerteschaltung werden die an der mittleren Elektrode abnehmbaren Wechselstromimpulse durch sehr kurze Impulse synchron detektiert und gleichgerichtet.

Über nachgeordnete elektronische Verstärker und Versteilerungsstufen werden die erhaltenen Meßsignale in ihrer Form konkretisiert und - in ihrer sekundlichen Impulsfolge durch elektronische Frequenzteilerstufen reduziert - einem nachgeordneten Impulsgeber zugeführt, der die Anzeige für das gemessene Durchlaufvolumen fortstellt.

Die mittlere Elektrode des elektrolytischen Meßsystemes ist zur besseren Signaldefinition über einen ohmschen Widerstand nach Masse geschaltet. Dadurch sollen Meßfehler verhindert und störende Einflußnahmen unterdrückt werden.

Durch die bekanntgewordene Auswerteschaltung nach der EP-A-0171047 ist zwar eine bessere signaltechnische Auswertung der in einem elektrolytischen Meßsystem gewonnenen Meßsignale auf elektronische Weise möglich. Es werden jedoch lediglich die Elektroden der Meßschaltung als solche symbolisch angedeutet. Aus dieser Druckschrift sind jedoch keine Hinweise bezüglich der mechanischen Ausgestaltung des verwendeten Meßsystemes zur Erzeugung der Meßimpulse entnehmbar.

Obwohl die Schaltungsanordnung nach der EP-A-0171047 eine gewisse Konkretisierung der am Geber erhaltenen Signale bei gleichzeitiger Störungsunterdrückung ermöglicht, ist es dennoch erforderlich, daß schon am Geber des Durchflußmengenmessers Signale erhalten werden, welche eine sichere Aussteuerung dieser am Geber nachgeordneten Auswerteschaltung gewährleisten.

Gemäß einem älteren, nicht vorveröffentlichten eigenen Vorschlag, DE-A-36 12 714, ist dem als Tangential-Flügelrad ausgebildeten Meßelement ein kreisringsektorähnliches bzw. ein zur Drehachse des Meßelementes exzentrisch angeordnetes Teil als Steuerelement lateral zugeordnet, welches zusammen mit dem Meßelement beweglich ist und hierbei durch die periodische Veränderung des an Elektroden meßbaren elektrischen Widerstandes innerhalb des zu erfassenden elektrolytischen Mediums zur Erzeugung der die Umdrehungsspiele des Meßelementes kennzeichnenden elektrischen Signale dient.

Die Ausgestaltung, welche dem älteren Vorschlag zugrunde liegt, weist jedoch ebenfalls einen verhältnismäßig geringen und auch nicht besonders stark ausgeprägten Signalhub auf. Die Anordnung hat überdies zur Folge, daß Änderungen der elektrolytischen Eigenschaften des seiner Durchflußmenge nach zu messenden Mediums den Wert des Signalhubes nachteilig beeinflussen.

Die vorliegende Erfindung geht von dem Durchflußmengenmesser nach BE-A-890 523 aus, dessen für die Erfindung notwendigen Merkmale im Oberbegriff des Patentanspruchs 1 angegeben sind.

Der Erfindung liegt die Aufgabe zugrunde, diesen Durchflußmengenmesser so zu verbessern, daß ein größerer, besser definierter und konstanterer Signalpegel erzielbar ist.

Die Erfindung löst die gestellte Aufgabe durch die mit Anspruch 1 gekennzeichnete neue Merkmalskombination.

Einzelne Merkmale, jedoch in einem anderen Zusammenhang, sind aus folgenden Druckschriften bekannt.

Aus US-A-4 389 902 ist ähnlich wie aus BE-A-890 523 ein Durchflußmengenmesser bekannt, bei welchem mit einem drehbeweglichen Meßelement ein als koaxiales Rohrteil ausgebildetes Steuerelement verbunden ist, dessen Umfang axial gerichtete Schlitze besitzt. Diese werden zur Ermittlung der Drehzahl und damit der Durchflußmenge mittels einer Lichtschranke abgetastet. Anders als beim Gegenstand der Erfindung wird als Meßwert nicht der sich ändernde elektrische Widerstand des flüssigen Mediums herangezogen, woraus sich grundsätzliche bauliche Unterschiede ergeben.

Das gleiche gilt für den aus AT-376 302 bekannten Tachogenerator, welcher einen als koaxialen Hohlzylinder ausgebildeten Rotor besitzt, dessen Zahn- bzw. Zahnlückenfolge zur Ermittlung der Drehzahl kapazitiv abgetastet wird.

Lediglich bei dem Durchflußmengenmesser nach US-A-4 333 354 wird ähnlich wie beim Gegenstand der Erfindung die Veränderung des Stromweges in der Flüssigkeit und damit die periodische Änderung der elektrischen Leitfähigkeit des flüssigen Mediums zu Meßzwecken herangezogen. Konstruktiv unterscheidet sich die Erfindung von dieser bekannten Lösung allerdings grundlegend hinsichtlich der Elektrodenanordnung und -ausbildung, der Meßwerterzeugung sowie der konsequenten Trennung von Meßelement und Steuerelement. So können mittels des Durchflußmengenmessers nach vorliegender Erfindung bei geringerem Aufwand reproduzierbare Meßwerte mit großem Signalpegel erzeugt werden.

Weitere Ausgestaltungen und Fortbildungen des Gegenstandes der Erfindung sind mit den Ansprüchen 2 bis 11 angegeben.

Die Erfindung hat eine Reihe von Vorteilen aufzuweisen. So werden durch diese eine günstigere konstruktive Gestaltung und kleinere äußere Abmessungen des Durchflußmengenmessers möglich. Auf Grund der günstigen Abmessungen können vorhandene Gehäuse und Meßsysteme aus der herkömmlichen Technik weitgehend auch beim Gegenstand der Erfindung Anwendung finden. Auf Grund der Unabhängigkeit von wechselnden Leitwerten der zu verarbeitenden Medien kann die dem Meßsystem nachgeordnete elektronische Schaltung preiswerter aufgebaut werden. Die Anordnung nach der Erfindung hat ferner den Vorteil, daß die verwendeten Einzelteile einfach sind und in großen Stückzahlen preiswert im Kunststoffspritzverfahren hergestellt werden können.

Die Erfindung ist in Form eines Ausführungsbeispieles in den beiliegenden Zeichnungen dargestellt und in der nachfolgenden Beschreibung erläutert.

Es stellen dar:
- Figur 1: eine Schnittdarstellung der Anordnung nach der Erfindung entlang der Schnittlinie I nach I der Fig. 2.
- Figur 2: eine andere Schnittdarstellung der Anordnung nach der Erfindung nach der Schnittlinie II-II der Fig. 1.
- Figur 3: eine schematische Darstellung der Anordnung nach der Erfindung in Verbindung mit einem Blockschaltbild.
- Figur 4a, 4b: Impulsdiagramme der Anordnung nach der Erfindung für den Schaltungspunkt P der Fig. 3.

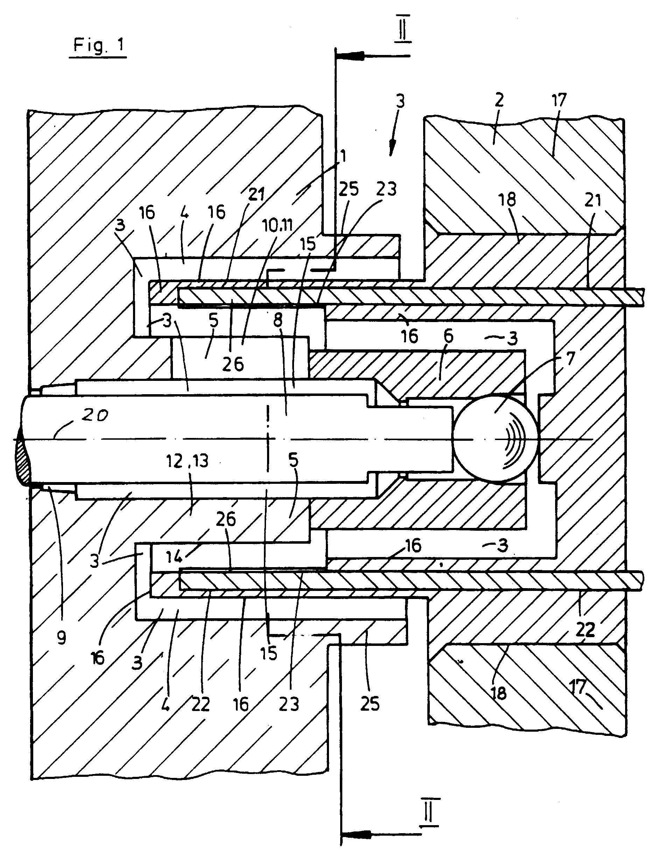

In Fig. 1 ist das z.B. als Flügelrad ausgebildete Meßelement 1 schematisch dargestellt. Das Meßelement 1 ist innerhalb eines Metallgehäuses 2 durch die radiale oder tangentiale Beaufschlagung durch das nach seinem Durchflußvolumen zu erfassenden flüssigen Medium 3 proportional zum Durchfluß antreibbar. Das flüssige Medium 3 ist wenigstens schwach elektrolytisch leitend.

In einer kreisförmigen Ausnehmung 4 des Meßelementes 1 ist das Rohrteil 5 vorgesehen, das an seinem vorderen Ende einen reduzierten Ansatz 6 aufweist, welcher der Lagerung des Meßelementes 1 dient. Der Ansatz 6 weist hierzu eine eingesetzte Lagerkugel 7 auf, die zusammen mit dem Ansatz 6 der Radial- und Achsiallagerung des Meßelementes 1 dient. Das Rohrteil 5 weist ferner eine dem Ansatz 6 abgewandte, ebenfalls der radialen Lagerung des Meßelementes 1 dienende Verjüngung 9 auf.

Hierzu ist eine Lagerwelle 8 vorgesehen, welche aus elektrisch leitendem Werkstoff, insbesondere Metall besteht und auch als Elektrode 8 für das Meßverfahren dient.

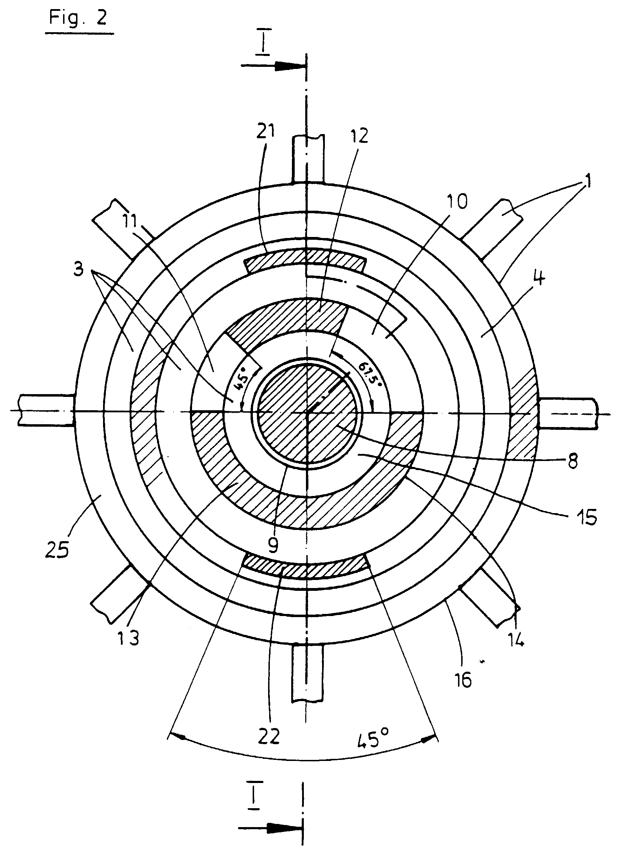

Aus den Schnittdarstellungen nach Fig. 1 und Fig. 2 ist entnehmbar, daß das Rohrteil 5 Durchbrüche 10, 11 aufweist, welche als längliche Schlitze ausgebildet und durch Rohrmantelsektoren 12 und 13 des Rohrteiles 5 begrenzt sind. Diese Durchbrüche 10, 11 weisen auf der Mantelfläche 14 des Rohrteiles 5 unterschiedliche Breiten auf, die durch Umfangswinkel von 45° und 67,5° gekennzeichnet sind. Sie umschließen zusammen mit dem Rohrmantelsektor 12 insgesamt einen Umfangswinkel von rund 180°, der durch den Rohrmantelsektor 13 mit seinem Umfangswinkel von wiederum 180° zu einem Vollkreis ergänzt wird.

Das Rohrteil 5 ist in seinem Innenraum 15 von dem flüssigen Medium 3 mitdurchsetzt.

Das Rohrteil 5 des rotierenden Meßelementes 1 ist nun von einem Trennrohr 16 umgeben, das in der dem Meßelement 1 gegenüberliegenden Gehäusewand 17 des Metallgehäuses 2 fest angeordnet ist. Das Trennrohr 16 wird von einer Buchse 18 getragen, welche Teil der Gehäusewand 17 ist.
In dem Trennrohr 16 und der Buchse 18 sind nun flache, zur Drehachse 20 des Meßelementes 1 achsparallele Elektroden 21, 22 vorzugsweise aus Metall angeordnet, welche der Mantelfläche 14 des Rohrteiles 5 im Bereich der Durchbrüche 10, 11 gegenüberstehen. Die Elektroden 21, 22 sind gegeneinander um 180° versetzt an der Innenwand 23 des Trennrohres 16 angeordnet.

Das Trennrohr 16 und die Buchse 18 bilden zusammen ein im Kunststoffspritzverfahren hergestelltes Teil, in welchem auch die Elektroden 21, 22 mit umspritzt sind. Die Elektroden 21, 22 sind an der gegenüberliegenden Seite der Gehäusewand 17 zum Anschluß an die nachgeordnete Schaltungsanordnung aus der Buchse 18 ausgeführt.
Aus Fig. 2 ist entnehmbar, daß die Elektroden 21, 22 einen Umfangswinkel von 45° einnehmen. Die in den Figuren 1 und 2 angegebenen Werte der Umfangswinkel für die Durchbrüche 10, 11 bzw. die Rohrmantelsektoren 12, 13 sowohl als auch für die Elektroden 21, 22, stellen eine vorteilhafte, bevorzugte Dimensionierung des Ausführungsbeispieles nach der Erfindung dar.

Das Meßelement 1 zusammen mit dem mit ihm verbundenen Rohrteil 5 werden zweckmäßig als ein Teil im Kunststoffspritzverfahren hergestellt. Das Rohrteil 5 stellt hierbei sozusagen die Lagernabe des beispielsweise als Flügelrad ausgebildeten Meßelementes 1 dar. Letzteres ist durch den Ansatz 6 und die Verjüngung 9 des Rohrteiles 5 radial gelagert, während die axiale Lagerung des Meßelementes 1 durch die Lagerkugel 7 im Ansatz 6 des Rohrteiles 5 gebildet ist.

Bei der Beaufschlagung des z.B. als Flügelrad ausgebildeten Meßelementes 1 vollzieht dieses eine Drehbewegung auf der als Elektrode 8 ausgebildeten Lagerwelle um die Drehachse 20.

Hierbei wird auch die relative Position der Durchbrüche 10, 11 bzw. der Rohrmantelsektoren 12, 13 des Rohrteiles 5 zu den feststehend im Trennrohr 16 angeordneten Elektroden 20, 21 verändert. Dadurch verändern sich aber auch abwechselnd die elektrischen Leitwerte bzw. der elektrische Widerstand über das wenigstens schwach elektrolytisch leitende flüssige Medium 3. Durch die Verlagerung der Durchbrüche 10, 11 bzw. der Rohrmantelsektoren 12, 13 des Rohrteiles 5 innerhalb des flüssigen Mediums relativ zu den feststehenden Elektroden 20, 21 werden die für den Wert der elektrolytischen Leitfähigkeit maßgebenden Zonen und Schichten des flüssigen Mediums 3 bezüglich ihrer wirksamen Längenausdehnung und/oder bezüglich ihres wirksamen Querschnittes variiert, wie aus den Figuren 1 und 2 entnehmbar ist.

Steht z.B. einer der Durchbrüche 10, 11 des Rohrteiles 5 einer der Elektroden 21, 22 gegenüber, so ist von der auch als Lagerwelle dienenden Elektrode 8 durch den Durchbruch 10 bzw. 11 hindurch nach der Elektrode 21, 22 ein direkter Leitweg über den Bezirk des an dieser Stelle befindlichen flüssigen Mediums 3 möglich, wohingegen die andere Elektrode 21, 20 durch den Rohrmantelsektor 13 von der Elektrode 8 abgeschirmt ist. Für die abgeschirmte andere Elektrode 21, 20 verläuft daher der Leitweg nach der Elektrode 8 sozusagen auf Umwegen über andere Zonen oder Schichten des Mediums 3 an dem Rohrmantelsektor 13 vorbei, so daß der Leitweg eine größere mittlere Längenausdehnung und auch einen geringeren mittleren Querschnitt aufweist und so dessen Leitwert somit verringert bzw. dessen Widerstand erhöht wird.

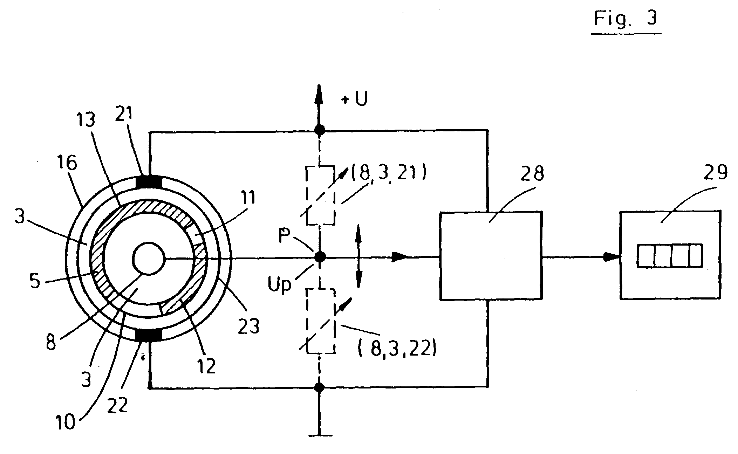

Auf Grund der gewählten Anordnung von zwei gegenüberliegenden Elektroden 20, 21 im Trennrohr 16 ist eine alternierende Beeinflussung der beiden Elektroden 20, 21 über das Rohrteil 5 möglich.
Durch eine Schaltungsanordnung, wie diese in Fig. 3 wiedergegeben ist, wird dann die Erzeugung eines komplementären Signales durchführbar, das unabhängig vom Leitwert des nach seinem Durchflußvolumen zu erfassenden Mediums 3 ist. Die Anordnung nach der Erfindung arbeitet in diesem Falle nach Art eines Potentiometers, wobei dessen Mittelabgriff durch die Elektrode 8 gebildet wird und die Außenanschlüsse durch die Elektroden 20,21 verwirklicht sind.

Die beiden gestrichelten Widerstände der Potentiometerschaltung nach Fig. 3 werden durch die Leitwerte des flüssigen Mediums 3 zwischen den Elektroden 8 und 20 einerseits sowie 8 und 21 andererseits gebildet. Diese Leitwerte werden pro volle Umdrehung des Rohrteiles 5 jeweils komplementär verändert, so daß an der Elektrode 8 bzw. an dem dieser entsprechenden Schaltungspunkt P ein alternierendes Signal abgreifbar ist.

Dieses alternierende Spannungssignal, das auf Grund der Anordnung und Ausgestaltung der Durchbrüche 10, 11 der Mantelfläche 14 des Rohrteiles 5 aus Impulsgruppen von je zwei Impulsen unterschiedlicher Länge besteht, wird der Zählelektronik 28 zugeführt, von welcher aus z.B. ein mechanisches Schrittschaltwerk mit nachgeordnetem Rollenzählwerk 29 oder ein elektronischer Zähler mit zugeordneter elektronischer Anzeige fortstellbar ist.

Das das Rohrteil 5 und die Elektroden 8; 21, 22 umfassende Trennrohr 16 dient einmal zur Straffung und Konzentrierung der zwischen den Elektroden 8, 21; 8, 22 verlaufenden leitenden Zonen des flüssigen Mediums 3. Dadurch soll eine Verstärkung des Signalhubes und eine Konkretisierung des Impulssignales erzielt werden. Im übrigen dient das Trennrohr 16 zur Halterung und einseitigen Isolierung der außen an der Mantelfläche 14 angeordneten Elektroden 21, 22.

Diese sind derart an der Innenseite 23 des Trennrohres 16 angebracht, daß sie nur im Bereich der Durchbrüche 10, 11 des Rohrteiles 5 mit dem flüssigen Medium 3 kontaktgebend in Verbindung stehen, im übrigen Bereich ihrer Oberfläche diese hingegen gegen das flüssige Medium 3 isoliert sind. Dies geschieht zweckmäßig dadurch, daß die Elektroden 21, 22 in der Innenwand 23 des Trennrohres 16 eingesetzt sind und in den zu isolierenden Bereichen von dem aus Kunststoff gefertigten Trennrohr 16 umschlossen sind. Durch diese Einengung der gegenüber dem flüssigen Medium 3 kontaktgebenden Oberflächen der Elektroden 21, 22 wird zusätzlich eine Konkretisierung und Versteilerung der verabfolgten Signale erreicht. Diese Ausbildung der teilweisen Isolierung der Elektroden 21, 22 im Inneren des Trennrohres 16 ist aus Fig. 1 detailliert entnehmbar.

Einem vergleichbaren Zweck dient der ringförmige Ansatz 25 seitlich am rotierenden Meßelement 1, der angenähert bis zur gegenüberliegenden Gehäusewand 17 des Metallgehäuses 2 reicht. Auch er dient einer Konzentrierung der relevanten leitenden Bezirke des flüssigen Mediums 3 auf den Bereich der Elektroden 8; 21, 22 und des Rohrteiles 5, d.h. zur Verbesserung des Signalhubes und der Signalsteilheit.

Bei Meßvorgängen in Rohrsystemen, z.B. bei chemischen Anlagen mit dem Durchflußmesser nach der Erfindung, kann nicht ausgeschlossen werden, daß ggf. auch ein Rückfluß des zu messenden liquiden Mediums im Rohrsystem eintritt.

Zur Feststellung des effektiven Durchflußvolumens wäre es somit zweckmäßig, auch die Drehrichtung des Meßelementes 1 während eines Meßvorganges zu erfassen, so daß eine Berücksichtigung des Vorzeichens des Durchflusses bei der Messung möglich wird.

Gemäß der Erfindung ist nun vorgesehen, durch das Steuerelement (5, 10 - 13) außer den dessen Drehbewegungen erfassenden Impulsen auch noch einen Drehrichtungsparameter zu verabfolgen und durch die Zählelektronik 28 mitverarbeiten zu lassen, so daß beim Zählvorgang auch die jeweilige Drehrichtung des Meßelementes 1 berücksichtigt werden kann.

Hierzu wird zweckmäßig durch das Steuerelement (5, 10 - 13) eine Codierung der Impulsgabe, z.B. nach einem Impulscode, insbesondere einem Impulslängencode, vorgenommen. Hierzu sind in der Mantelfläche 14 des Rohrteiles 5 zwei Durchbrüche 10, 11 vorgesehen, die eine unterschiedliche Breite aufweisen. Bei der Passage dieser Durchbrüche 10, 11, welche von den Rohrmantelsektoren 12, 13 begrenzt werden, zwischen den Elektroden 8, 21 bzw. 8, 22 hindurch, erfolgt kurzzeitig hintereinander jeweils die Verabfolgung zweier Impulse einer Leitwertserhöhung und damit eines Stromanstieges unterschiedlicher Breite. Je nachdem nun, welche Drehrichtung das Meßelement 1 einschlägt, erscheint in der jeweils aus zwei Impulsen bestehenden Impulsgruppe der breitere Impuls zuerst - oder umgekehrt - es erscheint zuerst der schmälere der beiden Impulse.

Durch eine der Zählelektronik 28 zugeordnete Diskriminatorschaltung läßt sich diese Impulslängencodierung in ein binäres Vorzeichensignal umsetzen, welches der Zählelektronik 28 zuführbar ist. Je nach der Durchflußrichtung des Mediums 3 und damit der Drehrichtung des Rotorteiles 5 wird dann entweder eine Vor- oder eine Rückstellung des Anzeigezählers bewirkt, um das effektiv durchgeflossene Volumen des flüssigen Mediums 3 feststellen zu können.

Hierzu ist ein reversierbarer Schrittmotor zum Antrieb des Rollenzählwerkes 29 in beiden Richtungen oder aber eine elektronische Anzeige 29 mit elektronischem Zählspeicher erforderlich, welche ein beliebiges Auf- und Abzählen erlauben.

In den Figuren 4a und 4b sind die bei den unterschiedlichen Drehrichtungen des Rohrteiles 5 bei einer Schaltungsanordnung nach Fig. 3 feststellbaren Impulsfolgen dargestellt.

Bei einer Rechtsdrehung (im Uhrzeigersinn) des Rotorteiles 5 erscheint gemäß Fig. 4a stets zuerst ein breiter Impuls und dann der schmälere Impuls einer Impulsgruppe in Form entweder einer erhöhten Spannung U_{P} oder einer erniedrigten Spannung U_{P}, welche an Punkt P der Schaltung, d.h. an der Elektrode 8 abfällt.

Die einzelnen Impulsgruppen treten nacheinander alternierend jeweils in Form einer Erhöhung und einer Absenkung des Spannungspegels U_{P} auf.

Bei einer Linksdrehung des Rotorteiles 5 hingegen tritt bei einer Impulsgruppe stets der schmälere der beiden Impulse zuerst auf, dem dann der breitere Impuls nachfolgt. Durch die der Zählelektronik 28 gemäß der Erfindung zugeordnete, nicht dargestellte Diskriminatorschaltung ist dieser Unterschied in der Impulsfolge erkennbar und somit als ein Drehrichtungs-und damit als ein Durchflußwechsel deutbar. Durch ein hieraus abgeleitetes Vorzeichensignal wird dann über die Zählelektronik 28 der Zählvorgang entsprechend umgeschaltet.

Die Darstellung der Impulse in den Figuren 4a und 4b ist der Verdeutlichung wegen versteilert erfolgt. Der tatsächliche Verlauf der einzelnen Impulse unmittelbar an den Elektroden 8; 21, 22 der Anordnung nach der Erfindung ist nicht so eindeutig ausgeprägt. Es bedarf vielmehr geeigneter bekannter elektronischer Mittel in der Zählelektronik 28, um die dargestellte Form der Impulse zu realisieren.

Diese beschriebene Möglichkeit ggf. auch eine entgegengesetzte Drehrichtung des Meßelementes 1 und damit einen Rückfluß des Mediums 3 im überwachten Rohrsystem zu erfassen, stellt einen weiteren Vorteil des Durchflußmengenmessers nach der Erfindung dar.

## Patentansprüche

1. Durchflußmengenmesser mit einem abhängig von der Fließgeschwindigkeit des flüssigen Mediums (3) drehbeweglichen Meßelement (1), z.B. einem Flügelrad, dessen Drehbewegungen in dazu proportionale elektrische Signale umwandelbar sind, welche einem elektrischen und elektronischen Zählwerk zur integrierenden Anzeige des Durchflußvolumens zuführbar sind, wobei mit dem drehbeweglichen Meßelement (1) wenigstens ein Steuerelement (5) bewegungsgekoppelt ist, das in einem elektrisch wenigstens schwach leitenden flüssigen Medium (3) angeordnet ist, dem mindestens zwei Elektroden (8; 21, 22) zugeordnet sind, über welche die der Drehbewegungszählung dienenden elektrischen Signale abnehmbar sind, wobei unter dem Einfluß der Drehbewegungen des Steuerelementes (5) eine periodische Veränderung des Wertes des an den Elektroden (8; 21, 22) meßbaren elektrischen Widerstandes des wenigstens schwach leitenden flüssigen Mediums (3) durch Veränderung der für dessen Wert maßgebenden Schichten und Zonen des flüssigen Mediums (3) bezüglich ihrer wirksamen Längenausdehnung und/oder ihres wirksamen Querschnitts eintritt, wobei das Steuerelement als ein koaxial zur Drehachse (20) des rotierenden Meßelementes (1) angeordnetes und mit diesem verbundenes Rohrteil (5) aus einem Werkstoff mit von derjenigen des Mediums (3) stark abweichender elektrischer Leitfähigkeit ausgebildet ist, das entlang seines Umfanges wenigstens einen Durchbruch (10, 11) in seiner Mantelfläche (14) aufweist, der als axial gerichteter Schlitz (10, 11) ausgebildet ist, wobei das Rohrteil (5) mit vom flüssigen Medium (3) umgeben bzw. von diesem durchsetzt ist, wobei ferner wenigstens zwei erste einander etwa diametral gegenüberliegende Elektroden (21, 22) außen nahe der Mantelfläche (14) des Rohrteils (5) und eine zweite Elektrode (8) innerhalb des Rohrteiles (5) angeordnet sind, dadurch gekennzeichnet, daß die ersten Elektroden als längliche sich über einem Umfangswinkel erstreckend, zum Rohrteil (5) achsparallel verlaufende Teile (21, 22) ausgebildet sind, und daß nur eine zweite Elektrode (8) koaxial innerhalb des Rohrteiles (5) vorgesehen ist, daß die ersten Elektroden (21, 22) jeweils nur mit einem etwa der axialen Länge des Durchbruches (10, 11) in der Mantelfläche (14) entsprechenden, diesem Durchbruch (10, 11) gegenüberliegenden Bereich (16) ihrer Oberfläche kontaktgebend mit dem flüssigen Medium (3) verbunden sind, in den übrigen Bereichen hingegen die ersten Elektroden (21, 22) gegen das Medium (3) isoliert ausgebildet sind, daß das Rohrteil (5) und das Meßelement (1) als ein Teil im Kunststoffspritzverfahren hergestellt sind und daß die zweite Elektrode (8) und das Rohrteil (5) als Lagerelemente des rotierenden Meßelementes (1) ausgebildet sind.

2. Durchflußmengenmesser nach Anspruch 1, dadurch gekennzeichnet, daß das mit dem rotierenden Meßelement (1) verbundene Rohrteil (5) in einer konzentrischen Ausnehmung (4) des rotierenden Meßelementes (1) angeordnet ist.

3. Durchflußmengenmesser nach Anspruch 1, dadurch gekennzeichnet, daß zwei Durchbrüche (10, 11) in der Mantelfläche (14) des Rohrteiles (5) vorgesehen sind, welche unterschiedlich groß sind und welche längs des Kreisumfangs des Rohrteiles (5) ungleichmäßig angeordnet sind.

4. Durchflußmengenmesser nach Anspruch 3, dadurch gekennzeichnet, daß die Durchbrüche als Schlitze (10, 11) von unterschiedlicher Breite ausgebildet sind.

5. Durchflußmengenmesser nach Anspruch 2, dadurch gekennzeichnet, daß seitlich an das rotierende Meßelement (1) im Bereich der Ausnehmung (4) ein ringförmiger Ansatz (25) angeformt ist.

6. Durchflußmengenmesser nach Anspruch 1, dadurch gekennzeichnet, daß das mit dem rotierenden Meßelement (1) verbundene Rohrteil (5) und die Elektroden (8; 21, 22) von einem feststehend angeordneten Trennrohr (16) aus einem Werkstoff mit einem von demjenigen des flüssigen Mediums (3) stark abweichenden elektrischen Leitwert umgeben sind, das vom Medium (3) mit durchsetzt ist.

7. Durchflußmengenmesser nach Anspruch 6, dadurch gekennzeichnet, daß das Trennrohr (16) als ein feststehend angeordnetes Teil ausgebildet ist und daß die außen nahe der Mantelfläche (14) des Rohrteiles (5) angeordneten ersten Elektroden (21, 22) an dem Trennrohr (16) angebracht sind.

8. Durchflußmengenmesser nach Anspruch 2 und 7, dadurch gekennzeichnet, daß das feststehend angeordnete Trennrohr (16) zusammen mit den an diesem angebrachten ersten Elektroden (21, 22) in die Ausnehmung (4) des rotierenden Meßelementes (1) hineinragt.

9. Durchflußmengenmesser nach Anspruch 7, dadurch gekennzeichnet, daß das feststehend angeordnete Trennrohr (16) zusammen mit den an ihm angebrachten ersten Elektroden (21, 22) sowie die in dem mit dem Meßelement (1) verbundenen Rohrteil (5) angebrachte zweite Elektrode (8) in umgebenden Gehäuseelementen (17) des Gehäuses (2) gehaltert sind.

10. Durchflußmengenmesser nach Anspruch 1 und 7, dadurch gekennzeichnet, daß die außen nahe der Mantelfläche (14) des Rohrteiles (5) angeordneten ersten Elektroden (21, 22) teilweise in der Innenwand (23) des Trennrohres (16) eingebettet sind.

11. Durchflußmengenmesser nach Anspruch 8, dadurch gekennzeichnet, daß das Trennrohr (16) zusammen mit einer der Durchführung von Elektroden (21, 22) durch die Gehäusewand (17) dienenden Buchse (18) ein im Kunststoffspritzverfahren hergestelltes Teil sind, in welchem Elektroden (21, 22) mit umspritzt sind.

## Claims

1. A flowmeter with a measuring element (1), for example an impeller, rotationally movable as a function of the flow velocity of the liquid medium (3), the rotational movements of which can be converted into electrical signals which are proportional thereto and which can be supplied to an electrical and electronic counting mechanism for the integrating display of the flow volume, wherein at least one control member (5) is kinetically connected to the rotationally moveable measuring element (1) and is arranged in a liquid medium (3) which is at least weakly conductive, with which at least two electrodes (8; 21, 22) are associated, via which the electrical signals used for counting the rotational movements can be inferred, wherein under the influence of the rotational movements of the control member (5) a periodic change in the value of the electrical resistance, measurable at the electrodes (8; 21, 22), of the at least weakly conductive liquid medium (3) takes place by changing the layers and zones of the liquid medium (3) determining the value thereof with respect to its effective longitudinal expansion and/or its effective cross section, wherein the control member is constructed as a tubular part (5) disposed coaxially to the axis of rotation (20) of the rotating measuring element (1) and connected thereto and made of a material having an electrical conductivity differing sharply from that of the medium (3), which along its periphery has at least one opening (10, 11) in its generated surface (14), which is constructed as an axially directed slot (10, 11), wherein the tubular part (5) is surrounded with the liquid medium (3) or is traversed thereby, wherein furthermore at least two first electrodes (21, 22) lying roughly diametrically opposite one another are disposed outside close to the generated surface (14) of the tubular part (5) and a second electrode ((8) is disposed inside the tubular part (5)
**characterised in that** the first electrodes are constructed as elongate parts (21, 22) extending over a peripheral angle and extending axially parallel to the tubular part,
**and in that** only one second electrode (8) is provided coaxially inside the tubular part (5),
**in that** the first electrodes (21, 22) are each in contact with the liquid medium (3) only with an area (16) corresponding roughly to the axial length of the opening (10, 11) in the generated surface (14) and lying opposite said opening, whereas in the other areas the first electrodes (21, 22) are constructed isolated from the medium (3),
**in that** the tubular part (5) and the measuring element (1) are constructed as one component in the plastics injection method
**and in that** the second electrode (8) and the tubular part (5) are constructed as bearing members for the rotating measuring element (1).

2. A flowmeter according to Claim 1,
**characterised in that** the tubular part (5) connected to the rotating measuring element(1) is disposed in a concentric recess (4) of the rotating measuring element (1).

3. A flowmeter according to Claim 1,
**characterised in that** two openings (10, 11) are provided in the generated surface (14) of the tubular part (5), which are of different size and which are disposed non-uniformly along the circular periphery of the tubular part (5).

4. A flowmeter according to Claim 3,
**characterised in that** the openings are constructed as slots (10, 11) of different widths.

5. A flowmeter according to Claim 2,
**characterised in that** an annular attachment (25) is integrally formed on the side of the rotating measuring element (1) in the region of the recess (4).

6. A flowmeter according to Claim 1,
**characterised in that** the tubular part (5) connected to the rotating measuring element (1) and the electrodes (8; 21, 22) are surrounded by a stationary separating tube (16) made from a material having an electrical conductivity differing sharply from that of the liquid medium (3) and jointly traversed by the medium (3).

7. A flowmeter according to Claim 6,
**characterised in that** the separating tube (16) is constructed in the form of a stationary part
**and in that** the first electrodes (21, 22) disposed outside close to the generated surface (14) of the tubular part (5) are mounted on the separating tube (5).

8. A flowmeter according to Claims 2 and 7,
**characterised in that** the stationary separating tube (16) together with the first electrodes (21, 22) mounted thereon projects into the recess (4) of the rotating measuring element (1).

9. A flowmeter according to Claim 7,
**characterised in that** the stationary separating tube (16) together with the first electrodes (21, 22) mounted thereon and also the second electrode (8) mounted in the tubular part (5) connected to the measuring element (1) are held in surrounding housing members (17) of the housing (2).

10. A flowmeter according to Claim 1 and 7,
**characterised in that** the first electrodes (21, 22) disposed outside close to the generated surface (14) of the tubular part (5) are partially embedded in the inner wall (23) of the separating tube (16).

11. A flowmeter according to Claim 8,
**characterised in that** the separating tube (16) together with a sleeve (18) used for the passage of electrodes (21, 22) through the housing wall (17) are a component which is produced in the plastics injection method and in which electrodes (21, 22) have material injected around them.

## Revendications

1. Débitmètre comportant un élément de mesure (1) à mouvement de rotation dépendant de la vitesse d'écoulement du milieu fluide (3), par exemple une roue à ailettes dont les mouvements de rotation peuvent être convertis en signaux électriques proportionnels fournis à un compteur électrique ou électronique pour l'affichage intégrant le volume débité, dans lequel :
- à l'élément de mesure (1) rotatif est accouplé pour le mouvement au moins un élément de commande (5) placé dans un milieu fluide (3) au moins faiblement électriquement conducteur avec au moins deux électrodes (8 ; 21, 22) pour capter les signaux électriques de comptage du mouvement de rotation,
- sous l'influence des mouvements de rotation de l'élément de commande (5) une modification périodique de la valeur de la résistance électrique du milieu fluide (3) au moins faiblement conducteur mesurable aux électrodes (8 ; 21, 22), apparaît par modification des couches et zones, du milieu fluide (3), déterminantes pour cette valeur, en se référant à leur dimension longitudinale efficace et/ou à leur section transversale efficace,
- l'élément de commande est réalisé sous la forme d'un élément tubulaire (5) coaxial à l'axe de rotation (20) de l'élément de mesure tournant (1), et relié à ce dernier élément, et qui est en une matière avec une conductibilité électrique s'écartant fortement de celle du milieu (3) et présente le long de sa périphérie, dans sa surface enveloppe (14) au moins un passage (10, 11) réalisé sous la forme d'une fente (10, 11) orientée axialement,
- l'élément tubulaire (5) est entouré du milieu fluide (3) ou est traversé par celui-ci,
- au moins deux premières électrodes (21, 22) opposées de manière sensiblement diamétrale, se trouvant à l'extérieur à proximité de la surface enveloppe (14) de l'élément tubulaire (5) et une seconde électrode (8) se trouve à l'intérieur de l'élément tubulaire (5),
caractérisé en ce que
les premières électrodes sont des pièces (21, 22) allongées, s'étendant sur un angle périphérique, en étant parallèle à l'axe de l'élément tubulaire (5),
- seulement une seconde électrode (8) coaxiale à l'intérieur de l'élément tubulaire (5),
- les premières électrodes (21, 22) sont reliées en surface de contact avec le milieu fluide (3) par une zone (16) en regard du passage (10, 11) et qui correspond sensiblement à la longueur axiale du passage (10, 11) dans la surface enveloppe (14),
- et dans les autres zones, les premières électrodes (21, 22) sont isolées par rapport au milieu (3),
- l'élément tubulaire (5) et l'élément de mesure (1) sont constitués par une pièce obtenue par injection de matière plastique et,
- la seconde électrode (8) et l'élément tubulaire (5) sont des éléments de palier pour l'élément de mesure rotatif (1).

2. Débitmètre selon la revendication 1,
caractérisé en ce que
l'élément tubulaire (5) relié à l'élément de mesure rotatif (1) est logé dans une cavité (4) concentrique de l'élément de mesure rotatif (1).

3. Débitmètre selon la revendication 1,
caractérisé par
deux passages (10, 11) réalisés dans la surface enveloppe (14) de l'élément tubulaire (5), ces passages étant de dimensions différentes et ils sont disposés de manière irrégulière le long de la périphérie de l'élément tubulaire (5).

4. Débitmètre selon la revendication 3,
caractérisé en ce que
les passages sont en forme de fentes (10, 11) de largeur différente.

5. Débitmètre selon la revendication 2,
caractérisé par
un épaulement annulaire (25) formé latéralement sur l'élément de mesure rotatif (1) au niveau de la cavité (4).

6. Débitmètre selon la revendication 1,
caractérisé en ce que
l'élément tubulaire (5) relié à l'élément de mesure rotatif (1) et les électrodes (8 ; 21, 22) sont entourés par un tube séparateur (16), fixe, réalisé en une matière ayant une conductivité électrique fortement différente de celle du milieu fluide (3), ce tube étant traversé par le fluide (3).

7. Débitmètre selon la revendication 6,
caractérisé en ce que
le tube séparateur (16) est une pièce fixe et les premières électrodes (21, 22) prévues extérieurement à proximité de la surface enveloppe (14) de l'élément tubulaire (5) sont montées sur le tube séparateur (16).

8. Débitmètre selon les revendications 2 et 7,
caractérisé en ce que
le tube séparateur (16) fixe, pénètre avec les premières électrodes (21, 22) qu'il porte dans la cavité (4) de l'élément de mesure rotatif (1).

9. Débitmètre selon la revendication 7,
caractérisé en ce que
le tube séparateur (16), fixe avec les premières électrodes (21, 22) qu'il porte ainsi que la seconde électrode (8) prévue sur l'élément tubulaire (5) relié à l'élément de mesure (1) sont tenus dans les éléments enveloppe (17) du boîtier (2).

10. Débitmètre selon les revendications 1 et 7,
caractérisé en ce que
les premières électrodes (21, 22) prévues extérieurement à proximité de la surface enveloppe (14) de l'élément tubulaire (5) sont intégrées en partie dans la paroi intérieure (23) du tube séparateur (16).

11. Débitmètre selon la revendication 8,
caractérisé en ce que
le tube séparateur (16) ainsi qu'une douille (18) servant au passage des électrodes (21, 22) dans la paroi (17) du boîtier sont constitués par une pièce fabriquée par injection de matière plastique enrobant les électrodes (21, 22).
